# EUROPEAN PATENT SPECIFICATION

(11) **EP 2 534 088 B1**
(45) Date of publication and mention of the grant of the patent: **09.07.2014**
(21) Application number: 11710876.1
(22) Date of filing: 10.02.2011
(51) Int. Cl.: B66F 9/19

(54) **A LOAD TRUCK AND A METHOD OF OFFLOADING A LOAD UNIT**
LKW UND VERFAHREN ZUM AUSLADEN EINER LADEEINHEIT
CHARIOT PORTE-CHARGE ET PROCÉDÉ DE DÉCHARGEMENT D'UNE UNITÉ DE CHARGE

(30) Priority: 12.02.2010 KE 104910
(43) Date of publication of application: 19.12.2012
(73) Proprietor: Moshe, Doron, Nairobi 00200 (KE); Moshe, Tiran, Nairobi 00200 (KE)
(72) Inventor: Moshe, Doron, Nairobi 00200 (KE); Moshe, Tiran, Nairobi 00200 (KE)
(74) Representative: Meyer-Dulheuer, Karl-Hermann
(86) International application number: PCT/IB2011/050562
(87) International publication number: WO 2011/098966

(56) References cited:
- EP-A1- 0 655 403
- WO-A2-2008/021190
- CN-Y- 201 325 852
- GB-A- 1 174 255
- IE-B1- 77 522
- US-A- 4 217 074
- US-A- 4 300 867

## Description

### FIELD OF THE INVENTION

THIS INVENTION relates to a load truck and a method of offloading a load unit. The invention relates, more particularly, to a load truck for moving load units laden on pallets or slip sheets and to a method of offloading such a load unit.

### BACKGROUND ART

A known method of moving load units for the purpose of transportation and storage is to palletise them. A large variety of load trucks exists to move palletised load units. These include low-lift pallet trucks and fork lift trucks. Pallet trucks may be propelled manually or by a motor. Some pallet trucks and fork lift trucks are operated by a ride-on operator and others by an operator on foot.

A more recently developed method of moving load units for the purpose of transportation and storage is to load them onto slip sheets instead of pallets. Proper moving of load units laden on slip sheets requires specialised load trucks. These include fork lift trucks fitted with so-called push/pull mechanisms for pulling load units onto their forks and for pushing them from the forks, and so-called roller forks. In some such load trucks, the push/pull mechanism includes a travelling push/pull member which is connected to a fixed part by means of a scissor mechanism, which maintains a fixed orientation of the push/pull member, and a hydraulic cylinder assembly acting between components of the scissor mechanism for effecting displacement of the push/pull member. EP 0655403 discloses a load truck according to the preamble of the claim 1.

Typically, load trucks used for moving palletized or load sheet laden load units may be classified into low-lift trucks and fork lift trucks. Low-lift trucks provide for only limited lifting of a load unit to clear the ground, whereas fork lift trucks provide for sufficient lifting of a load unit for inter alia stacking purposes. A low-lift truck may be either human propelled or motor propelled. Fork lift trucks typically are motor propelled. There are motor propelled, ride-on variants of both low-lift trucks and fork lift trucks. Walk-along load trucks, which are operable by a human operator on foot, may be either operator propelled or motor propelled. Operator propelled low-lift trucks, sometimes referred to as hand trucks, typically represent the low cost end of the spectrum of load trucks.

A disadvantage of commercially available load trucks for moving load units laden on pallets or slip sheets is cost. A first aspect of the invention aims to provide an economical load truck for moving load units laden on pallets or slip sheets.

It is sometimes required to place a load unit laden on a pallet or a slip sheet against an object, for example a front wall of a shipping container or another load unit. Such placement has two main advantages, namely assisting in load stability and optimising space utilization. In practice, the Applicant has found that, using a lightweight load truck, particularly a low-lift truck, for placing a load unit often results in a gap being left between the load unit and the object against which it was to be placed. A second aspect of the invention provides a method aimed at addressing this problem.

### INDUSTRIAL APPLICABILITY

Both the load truck and the method of the invention are applicable in moving load units laden on pallets or slip sheets for the purpose of storage and transportation in a wide variety of industries.

### BRIEF SUMMARY OF THE INVENTION

According to a first aspect of the invention there is provided a load truck including:
a load support structure for a load unit, the structure defining a front end, a rear end, and a longitudinal direction; and
a load shifting mechanism including:
   a fixed member, fixed with respect to the load support structure at a position rearwardly spaced from the front end of the load support structure;
   a travelling member defining an upright front face, above the load support structure and transverse to the load support structure, for operatively pushing a load unit from the load support structure, the travelling member being displaceable in the longitudinal direction between a rearward position, intermediate the front end of the load support structure and the fixed member and spaced apart from the said front end, and a forward position, at the said front end; and
   an actuation mechanism operable for displacing the travelling member between the rearward position and the forward position, characterized in that the actuation mechanism includes a hydraulic cylinder assembly having opposite ends thereof connected to the fixed member and the travelling member, respectively, and being operable to exert opposing forces between the members to displace the travelling member from the rearward to the forward position.

The applicant has found that the configuration of the actuation mechanism permits the use of a smaller hydraulic cylinder assembly and/or lower hydraulic pressure than is the case with a conventional push/pull mechanism in which a hydraulic cylinder assembly acts between components of a scissor mechanism. This results in a potential cost and weight saving in a load truck, in accordance with the invention.

The hydraulic cylinder assembly has a central axis disposed in the longitudinal direction of the load support structure. The hydraulic cylinder assembly may be a telescopic cylinder assembly. The hydraulic cylinder assembly is double acting. In this case, the actuation mechanism is a push/pull mechanism and may be provided with a slip sheet gripping mechanism for gripping a slip sheet for pulling a load unit laden on the slip sheet onto the load support formation.

The load shifting mechanism includes a scissor mechanism interconnecting the travelling member and the fixed member for maintaining a fixed orientation of the travelling member relative to the load support structure.

The load truck may be a low-lift truck, in which the load support structure is adjustable only within a limited height range near ground level. The load truck may be operable by a human operator on foot. It may be propelled by the operator. The applicant particularly believes that such a load truck may provide an economical and practical means for moving load units laden on slip sheets.

It must be appreciated that the load truck of the invention may be of any type essentially as herein envisaged, i.e. a low-lift truck or a fork lift truck, human propelled or motor propelled, and ride-on or walk-along.

According to a second aspect of the invention there is provided a method of offloading a load unit against an object, the method including:
supporting the load unit on a load support structure of a load truck, the load support structure defining a front end, a rear end, and a longitudinal direction and the load truck including a load shifting mechanism operable to push the load unit from the load support structure in a forward direction of the load support structure;
positioning the load truck for offloading the load unit adjacent to the object, with the front end of the load support structure facing the object; and
by operation of the load shifting mechanism, pushing the load unit from the load support structure in the longitudinal direction,
characterized in that, during at least a last stage of the pushing of the load unit, the load truck is anchored by means of anchoring means to a fixed securing formation in a configuration in which the load truck is restrained against displacement in a rearward direction of the load support structure, resulting in the load shifting mechanism pushing the load unit into abutment with the object.

The problem referred to above of a gap being left during offloading is thereby ameliorated by the method of the second aspect of the invention. Advantages include optimisation of space usage and load stability.

The load truck used in the method may be a low-lift truck, in which the load support structure is adjustable only within a limited height range near ground level.

The load truck may be operable by a human operator on foot. It may be propelled by the operator.

In the method, the fixed securing formation includes a pair of securing members provided in a shipping container at opposite sides of a floor of the container. The anchoring means includes two lengths of tie element on opposite sides of the load truck and having respective ends thereof remote from the load truck releasably engaged with the respective securing members.

The two lengths of tie element may be two lengths of a single tie element. Each length of tie element may, for example, be a length of chain, rope, belt, cable, lashing, or the like.

It must be appreciated that the method of the invention may be applied to any type of load truck essentially as herein envisaged, i.e. a low-lift truck or a fork lift truck, human propelled or motor propelled, and ride-on or walk-along.

### BRIEF DESCRIPTION OF THE DRAWINGS

The invention is described below by way of example with reference to and as illustrated in the accompanying diagrammatic drawings.

In the drawings:
Figure 1 shows a rear three-dimensional view of a load truck, in accordance with the first aspect of the invention, in a first operative configuration thereof;
Figure 2 shows a rear three-dimensional view of the load truck of Figure 1, in a second operative configuration thereof;
Figure 3 shows a side view of the load truck of Figure 1, in the first operative configuration;
Figure 4 shows a side view of the load truck of Figure 1, in the second operative configuration; and
Figures 5 to 7 show respectively three steps in a method, in accordance with the second aspect of the invention, of offloading a load unit against an object, in this example in a shipping container using the load truck of Figure 1.

### DETAILED DESCRIPTION OF THE INVENTION

In the drawings, an embodiment of a load truck, in accordance with the first aspect of the invention, is designated generally by reference numeral 10. The load truck 10 is a low-lift truck.

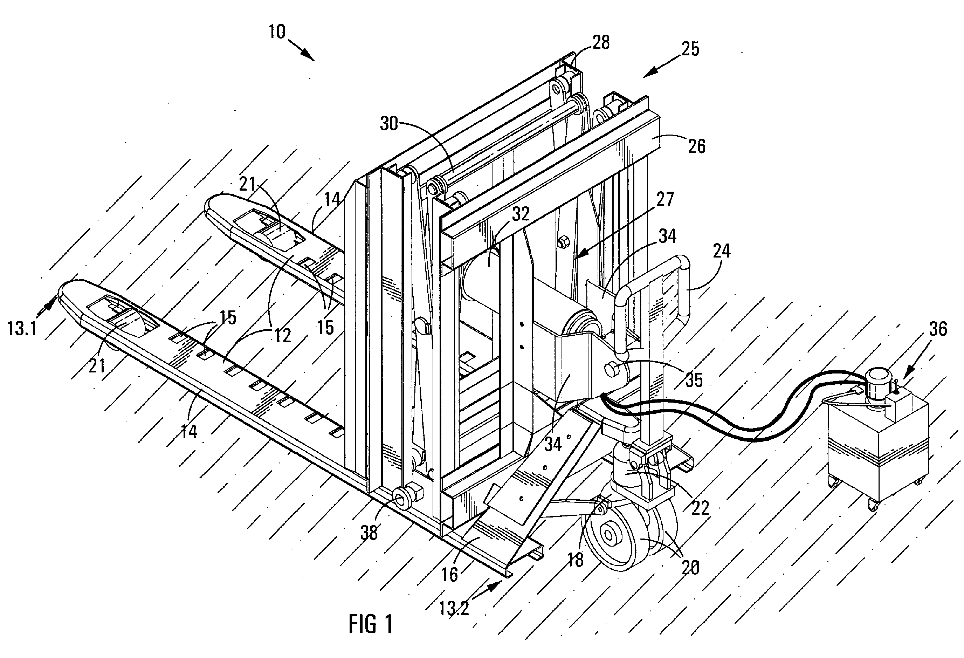

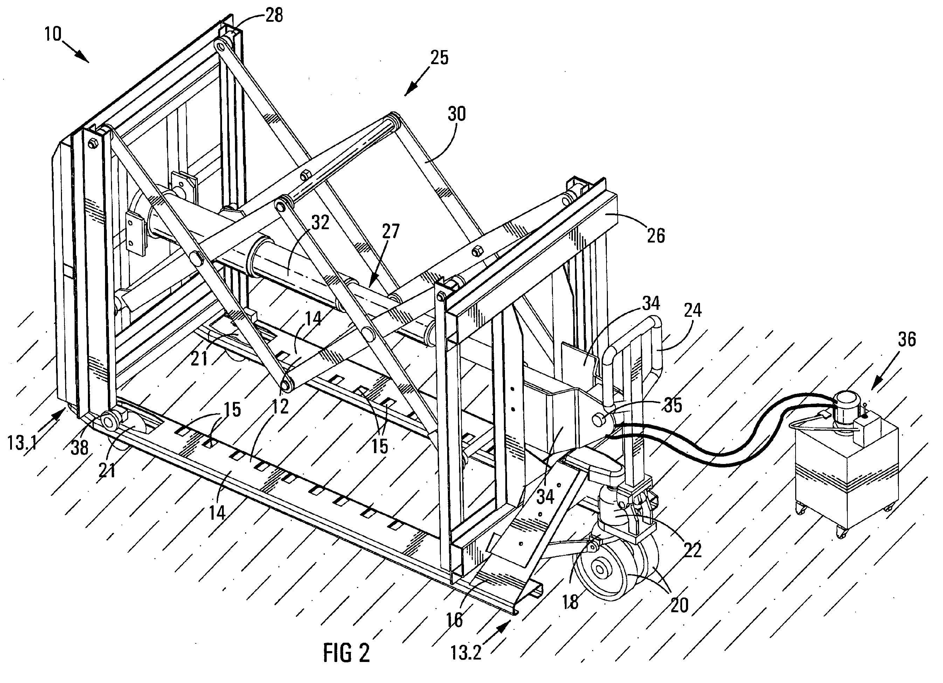

With reference particularly to Figures 1 and 2, the load truck 10 includes:
a load support structure in the form of a fork 12 including two parallel, spaced apart fork beams 14;
a bogie mounting assembly 16 mounted on rear ends of the fork beams 14;
a bogie 18 including a pair of rear wheels 20;
a pair of front wheels 21, supporting the respective fork beams 14;
a lifting mechanism including a hydraulic jack 22, for lifting and lowering the fork 12 on the wheels 20 and 21; and
a handle 24.

The fork beams 14 extend in a longitudinal direction of the fork 12. The fork 12 has a front end 13.1 and a rear end 13.2. Each fork beam 14 includes a series of longitudinally spaced load support rollers 15.

The load truck 10 is manually operated and propelled by a human operator on foot. The operator uses the handle 24 for actuating the hydraulic jack 22 for lifting and lowering the fork 12.

Insofar as the above features and the operation of the load truck 10 are known in relation to pallet trucks, they are not elaborated on in detail herein.

In accordance with the invention, the load truck 10 includes a load shifting mechanism 25 including:
an upright fixed member in the form of a fixed frame 26 mounted on the fork beams 14 just in front of the bogie mounting assembly 16;
an upright travelling member in the form of a travelling frame 28, supported on the respective fork beams 14 by means of the two support wheels 38 which travel on the respective fork beams 14;
a scissor mechanism 30 interconnecting the frames 26 and 28; and
an actuator mechanism 27 including:
   a longitudinal double acting, telescopic, hydraulic cylinder assembly 32 acting between the fixed frame 26 and the travelling frame 28; and
   a power pack 36 for powering the hydraulic cylinder assembly 32 by means of pressurised hydraulic oil.

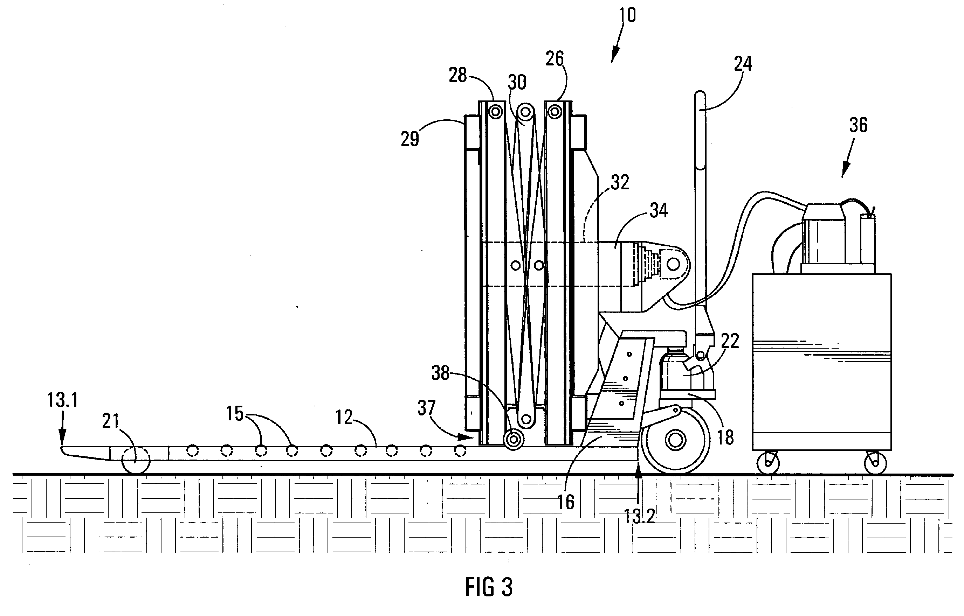

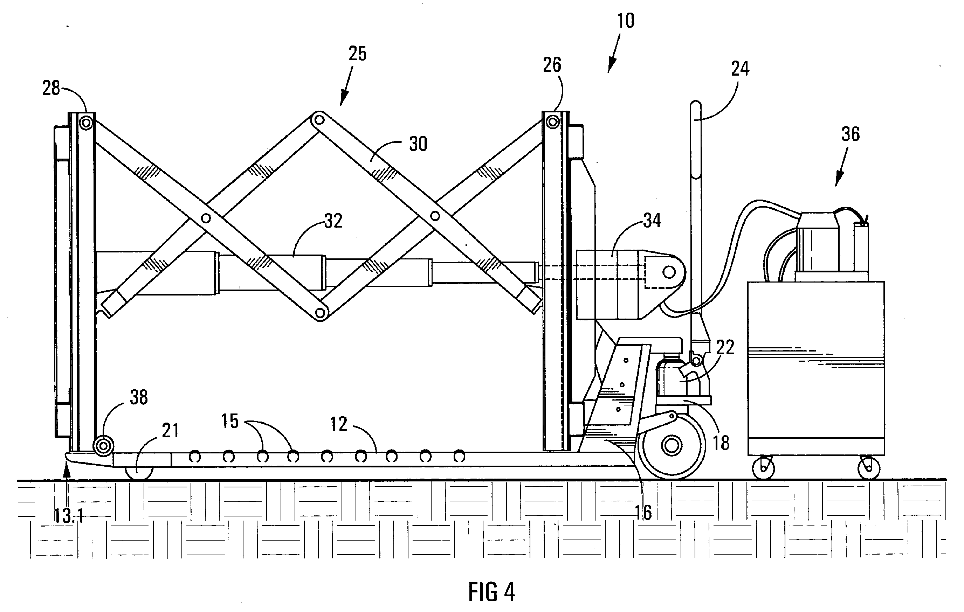

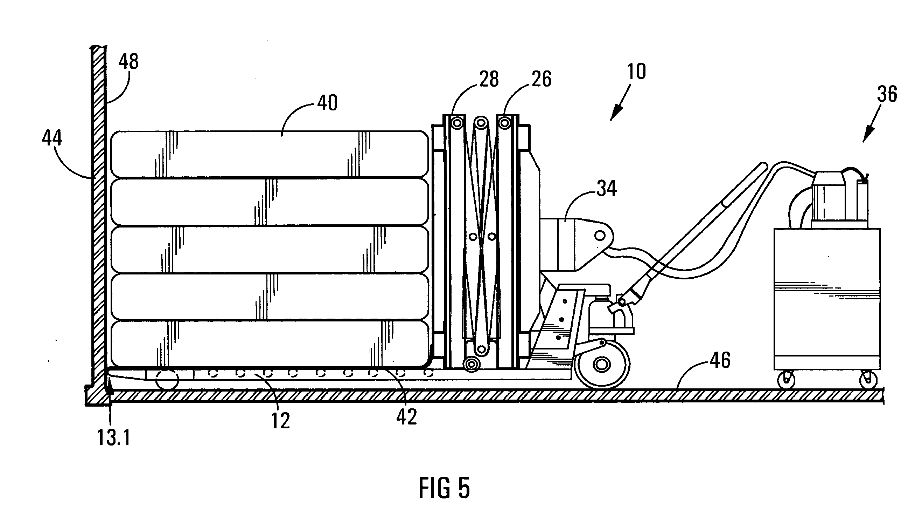

The scissor mechanism 30 provides for displacement of the travelling frame 28 between a rearward position, as shown in Figures 1 and 5, and a forward position, as shown in Figures 2, 4, and 7. The scissor mechanism 30 maintains the travelling frame 28 parallel to the fixed frame 26 so that an upright front face 29 (see Figure 3) of the travelling frame 28 is maintained upright and transverse relative to the fork 12.

A front end of the hydraulic cylinder assembly 32 is connected to a centre of the travelling frame 28 whereas a rear end of the hydraulic cylinder assembly 32 is connected to the fixed frame 26. More particularly, a rear portion of the hydraulic cylinder assembly 32 passes through a centre of the fixed frame 26 and is connected thereto by means of two opposite brackets 34 projecting rearwardly from the fixed frame 26, with a dowel pin 35 releasably interconnecting a rear end of the hydraulic cylinder assembly 32 and the brackets 34.

By operation of the power pack 36, the hydraulic cylinder assembly 32 is selectively extended or contracted, thereby displacing the travelling frame 28 forwardly or rearwardly, respectively.

The load truck 10 may be used in the configuration shown in Figure 1, with the travelling frame 28 in its rearward position, for moving a palletized load unit in conventional fashion.

Alternatively, the load truck 10 may be used for moving a load unit laden on a slip sheet. For this purpose, the load shifting mechanism 25 may be provided with a slip gripping mechanism (not shown) along a bottom edge 37 (see Figure 3) of the travelling frame 28. Such a slip gripping mechanism may be essentially conventional and therefore does not require illustration or description herein.

With reference now to Figures 5 to 7 of the drawings, a method of offloading a load unit, in accordance with the second aspect of the invention, will now be described. It is sometimes required to place a load unit laden on a slip sheet against an object, for example a front wall of a shipping container or another such load unit. Such placement has two main advantages, namely assisting in load stability and optimising space utilization. In practice, the Applicant has found that, using a lightweight load truck for placing a load unit often results in a gap being left between the load unit and the object against which it was to be placed. The method of the second aspect of the invention aims to address this problem.

In Figure 5, a load unit 40 has been laden on a slip sheet 42 and supported on the fork 12 of the load truck 10. The load truck 10, with the load unit 40 thereon, has been pushed into a shipping container 44, which has a floor 46 and an end wall 48, into the position shown in which the front end 13.1 of the fork 12 abuts the end wall 48.

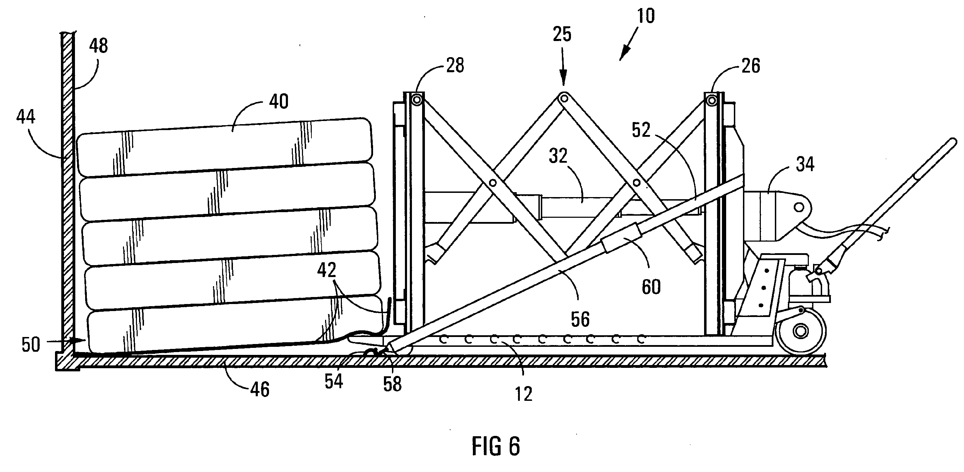

In Figure 6, by operating the power pack 36 (see Figure 5), the hydraulic cylinder assembly 32 has been partially extended, causing forward displacement of the travelling frame 28. The travelling frame 28, with its face 29 bearing against the load unit 40, has pushed the load unit 40 and slip sheet 42 into a position in which they are predominantly supported on the floor 46 and only minimally on the front end of the fork 12. Such extension of the hydraulic cylinder assembly 32 has caused a rearward displacement of the load truck 10. A gap 50 has been inadvertently left between the load unit 40 and the wall 48, as the applicant has found often happens in practice.

Anchoring means in the form of an anchoring accessory 52 is now used to anchor the load truck 10 to prevent further rearward displacement. The floor 46 of the container 44 has conventionally been provided with a number of securing lugs along opposite sides of the floor 46, of which only one lug 54 is shown. The securing lugs 54 define a fixed securing formation on the floor 46. Another such lug 54 is at a corresponding position on the opposite side of the floor 46 and of the load truck 10.

The anchoring accessory 52 comprises a tie element in the form of a lashing 56, two hooks 58 on opposite ends of the lashing 56, and a conventional manually operable tensioning mechanism 60 (not shown in detail). The hooks 58 are engaged with the respective lugs 54 and the lashing 56 has been placed around the back of the fixed frame 26 so that a length of tie element is defined on each side of the load truck 10. The lashing 56 has been nominally tensioned by means of the tensioner 60. The anchoring accessory 52 resists rearward displacement of the load truck 10.

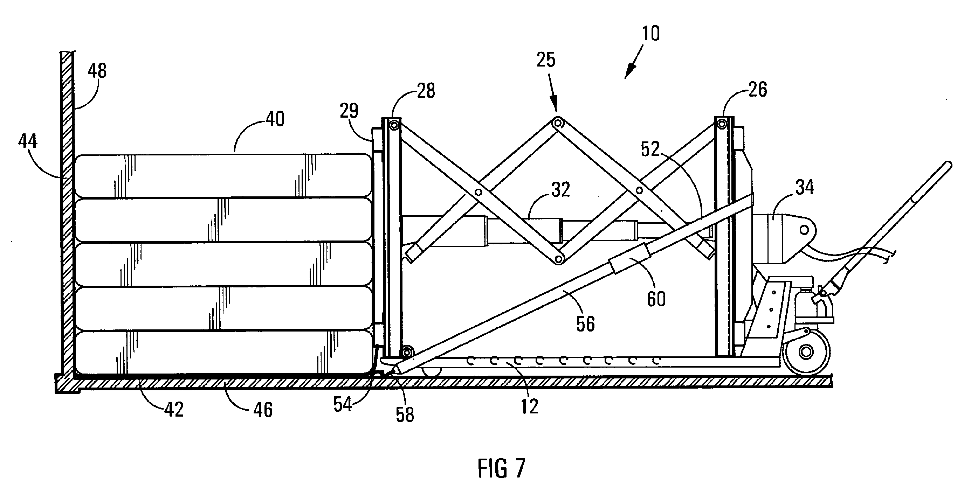

In Figure 7, by operating the power pack 36 (see Figure 5), the hydraulic cylinder assembly 32 has been completely extended. The load unit 40 and the slip sheet 42 have been pushed by the travelling frame 28 into a position in which they are entirely supported on the floor 46 in front of the fork 12. The gap 50 of Figure 6 has been closed so that the load unit 40 is flush against the wall 48.

The load truck 10 may now be released by removing the anchoring accessory 52.

The Applicant submits that the configuration of the load shifting mechanism 25, particularly the configuration of the hydraulic cylinder assembly 32 acting longitudinally between the travelling frame 28 and the fixed frame 26, provides an efficient, economical, and practical load shifting arrangement.

Although the load truck 10 in the above examples is a walk-along, human propelled, low-lift truck, it must be appreciated that different embodiments of a load truck, in accordance with the invention, may be of any type essentially as herein envisaged, i.e. a low-lift truck or a fork lift truck, human propelled or motor propelled, and ride-on or walk-along. So, for example, the load shifting mechanism 25 may alternatively be provided on a motor propelled fork lift truck. Similarly, the method of the second aspect of the invention may be applied to any type of load truck of the general type referred to herein.

## Claims

1. A load truck (10) including:
a load support structure (12) for a load unit, the structure defining a front end, a rear end, and a longitudinal direction; and
a load shifting mechanism (25) including:
a fixed member (26), fixed with respect to the load support structure (12) at a position rearwardly spaced from the front end of the load support structure (12).
a travelling member (28) defining an upright front face, above the load support structure (12) and transverse to the load support structure (12), for operatively pushing a load unit from the load support structure (12), the travelling member (28) being displaceable in the longitudinal direction between a rearward position, intermediate the front end of the load support structure (12) and the fixed member (26) and spaced apart from the said front end, and a forward position, at the said front end;
a scissor mechanism (30) interconnecting the traveling member (28) and the fixed member (26) for maintaining a fixed orientation of the travelling member (28) relative to the load support structure (12), and
an actuation mechanism (27) including a hydraulic cylinder assembly (32) which is a double-acting telescopic hydraulic cylinder assembly and which is operable for displacing the travelling member (28) between the rearward position and the forward position,
**characterized in that** the hydraulic cylinder assembly (32) has opposite ends thereof connected to the fixed member (26) and the travelling member (28), respectively, and being operable to exert opposing forces between the members to displace the travelling member (28) from the rearward to the forward position, the hydraulic cylinder assembly (32) being and having a central axis disposed in the longitudinal direction of the load support structure (12).

2. A load truck as claimed in claim 1, **characterized in that** it is a low-lift truck, in which the load support structure (12) is adjustable only within a limited height range near ground level.

3. A load truck as claimed in claim 1 or claim 2, **characterized in that** it is operable by a human operator on foot.

4. A load truck as claimed in claim 3, **characterized in that** it is propelled by the operator.

5. A load truck as claimed in any of the preceding claims, **characterized in that** it includes anchoring means in the form of an anchoring accessory (52) operable to anchor the load truck (10) to opposite sides of a floor of a shipping container to prevent inadvertent rearward displacement thereof.

6. A method of offloading a load unit against an object, the method including:
supporting the load unit on a load support structure (12) of a load truck (10), the load support structure (12) defining a front end, a rear end, and a longitudinal direction and the load truck (10) including a load shifting mechanism (30, 32) operable to push the load unit from the load support structure in a forward direction of the load support structure (12),
positioning the load truck (10) for offloading the load unit adjacent to the object, with the front end of the load support structure (12) facing the object; and
by operation of the load shifting mechanism (30, 32) pushing the load unit from the load support structure (12) in the longitudinal direction, such that during at least a last stage of the pushing of the load unit, the load truck (10) is anchored by means of anchoring means (52) to a fixed securing formation in a configuration in which the load truck (10) is restrained against displacement in a rearward direction of the load support structure (12), resulting in the load shifting mechanism (30, 32) pushing the load unit into abutment with the object,
**characterized in that** the fixed securing formation includes a pair of securing members (54) provided in a shipping container at opposite sides of a floor of the container and the anchoring means includes two lengths of tie element (56) on opposite sides of the load truck (10) and having respective ends thereof remote from the load truck (10) releasably engaged with the respective securing members (54).

## Patentansprüche

1. Lastenwagen (10), der Folgendes einschließt:
eine Lasttragstruktur (12) für eine Lasteinheit, wobei die Struktur ein vorderes Ende, ein hinteres Ende und eine Längsrichtung definiert; und
einen Lastverschiebungsmechanismus (25), der Folgendes einschließt:
ein unbewegliches Element (26), unbeweglich in Bezug auf die Lasttragstruktur (12) an einer Position mit Abstand von dem vorderen Ende der Lasttragstruktur (12) nach hinten angeordnet;
ein bewegliches Element (28), das eine aufrechte vordere Fläche, oberhalb der Lasttragstruktur (12) und quer zu der Lasttragstruktur (12), definiert, um wirksam eine Lasteinheit von der Lasttragstruktur (12) zu schieben, wobei das bewegliche Element (28) in der Längsrichtung verschiebbar ist zwischen einer hinteren Stellung, zwischen dem vorderen Ende der Lasttragstruktur (12) und dem unbeweglichen Element (26) und mit Abstand entfernt von dem vorderen Ende angeordnet, und einer vorderen Stellung, an dem vorderen Ende;
einen Scherenmechanismus (30), der das bewegliche Element (28) und das unbewegliche Element (26) miteinander verbindet, um eine festgelegte Ausrichtung des beweglichen Elements (28) im Verhältnis zu der Lasttragstruktur (12) aufrechtzuerhalten; und
einen Betätigungsmechanismus (27), der eine Hydraulikzylinder-Baugruppe (32) einschließt, die eine doppeltwirkende Hydraulikzylinder-Baugruppe ist und die funktionsfähig ist, um das bewegliche Element (28) zwischen der hinteren Stellung und der vorderen Stellung zu verschieben,
**dadurch gekennzeichnet, dass** die Hydraulikzylinder-Baugruppe (32) entgegengesetzte Enden derselben hat, die mit dem unbeweglichen Element (26) beziehungsweise dem beweglichen Element (28) verbunden sind und funktionsfähig sind, um entgegengesetzte Kräfte zwischen den Elementen auszuüben, um das bewegliche Element (28) von der hinteren Stellung zu der vorderen Stellung zu verschieben, wobei die Hydraulikzylinder-Baugruppe (32) und eine Mittelachse, die sie hat, in der Längsrichtung der Lasttragstruktur (12) angeordnet sind.

2. Lastenwagen nach Anspruch 1, **dadurch gekennzeichnet, dass** er ein Niederhub-Lastenwagen ist, bei dem die Lasttragstruktur (12) nur innerhalb eines begrenzten Höhenbereichs nahe dem Boden einstellbar ist.

3. Lastenwagen nach Anspruch 1 oder Anspruch 2, **dadurch gekennzeichnet, dass** er durch einen menschlichen Bediener zu Fuß bedienbar ist.

4. Lastenwagen nach Anspruch 3, **dadurch gekennzeichnet, dass** er durch den Bediener angetrieben wird.

5. Lastenwagen nach einem der vorhergehenden Ansprüche, **dadurch gekennzeichnet, dass** er Verankerungsmittel in der Form eines Verankerungszubehörs (52) einschließt, das funktionsfähig ist, um den Lastenwagen (10) an entgegengesetzten Seiten eines Bodens eines Versandbehälters zu verankern, um eine unbeabsichtigte Rückwärtsverschiebung desselben zu verhindern.

6. Verfahren zum Abladen einer Last an einem Gegenstand, wobei das Verfahren Folgendes einschließt:
das Tragen der Lasteinheit auf einer Lasttragstruktur (12) eines Lastenwagens (10), wobei die Lasttragstruktur (12) ein vorderes Ende, ein hinteres Ende und eine Längsrichtung definiert und der Lastenwagen (10) einen Lastverschiebungsmechanismus (30, 32) einschließt, der funktionsfähig ist, um die Lasteinheit in einer Vorwärtsrichtung der Lasttragstruktur (12) von der Lasttragstruktur zu schieben;
das Positionieren des Lastenwagens (10) zum Abladen der Lasteinheit angrenzend an den Gegenstand, wobei das vordere Ende der Lasttragstruktur (12) zu dem Gegenstand zeigt; und
durch Betätigung des Lastverschiebungsmechanismus (30, 32) das Schieben der Lasteinheit von der Lasttragstruktur (12) in der Längsrichtung derart, dass wenigstens während eines letzten Stadiums des Schiebens der Lasteinheit der Lastenwagen (10) mit Hilfe von Verankerungsmitteln (52) an einer unbeweglichen Befestigungsformation verankert wird, in einer Konfiguration, in welcher der Lastenwagen (10) gegen eine Verschiebung in einer Rückwärtsrichtung der Lasttragstruktur (12) zurückgehalten wird, was dazu führt, dass der Lastverschiebungsmechanismus (30, 32) die Lasteinheit in Stoß mit dem Gegenstand schiebt, **dadurch gekennzeichnet, dass** die unbewegliche Befestigungsformation ein Paar von Befestigungselementen (54) einschließt, die in einem Versandbehälter an entgegengesetzten Seiten eines Bodens des Behälters bereitgestellt werden, und die Verankerungsmittel zwei Längen eines Verbindungselements (56) an entgegengesetzten Seiten des Lastenwagens (10) einschließen und jeweilige von dem Lastenwagen (10) entfernte Enden derselben haben, die lösbar mit den jeweiligen Befestigungselementen (54) gebracht werden.

## Revendications

1. Chariot élévateur (10) incluant :
une structure de support de chargement (12) pour une unité de chargement, la structure définissant une extrémité avant, une extrémité arrière et une direction longitudinale ; et
un mécanisme de déplacement de chargement (25) incluant :
un élément fixe (26), fixé par rapport à la structure de support de chargement (12) à une position espacée à l'arrière de l'extrémité avant de la structure de support de chargement (12) ;
un élément déplaçable (28) définissant une face avant supérieure, au-dessus de la structure de support de chargement (12) et transversale à la structure de support de chargement (12) pour pousser opérationnellement une unité de chargement à partir de la structure de support de chargement (12), l'élément déplaçable (28) étant déplaçable dans la direction longitudinale entre une position arrière, intermédiaire à l'extrémité avant de la structure de support de chargement (12) et l'élément fixe (26) et espacée de ladite extrémité avant, et une position avant, au niveau de ladite extrémité frontale ;
un mécanisme de ciseau (30) interconnectant l'élément déplaçable (28) et l'élément fixe (26) pour conserver une orientation fixe de l'élément déplaçable (28) par rapport à la structure de support de chargement (12) ; et
un mécanisme d'actionnement (27) incluant un ensemble de vérin hydraulique (32) qui est un ensemble de vérin hydraulique télescopique à double action et qui est opérationnel afin de déplacer l'élément déplaçable (28) entre la position arrière et la position avant,
**caractérisé en ce que** l'ensemble de cylindre hydraulique (32) possède des extrémités opposées raccordées à l'élément fixe (26) et à l'élément déplaçable (28), respectivement, et étant opérationnel afin d'exercer des forces opposées entre les éléments afin de déplacer l'élément déplaçable (28) de la position arrière à la position avant, l'ensemble de vérin hydraulique (32) étant et ayant un axe central disposé dans la direction longitudinale de la structure de support de chargement (12).

2. Chariot élévateur selon la revendication 1, **caractérisé en ce que** il s'agit d'un chariot élévateur à petite levée, dans lequel la structure de support de chargement (12) est ajustable seulement dans une plage de hauteur limitée proche du niveau du sol.

3. Chariot élévateur selon les revendications 1 ou 2, **caractérisé en ce que** il est opérationnel par un opérateur humain à pied.

4. Chariot élévateur selon la revendication 3, **caractérisé en ce qu'**il est propulsé par l'opérateur.

5. Chariot élévateur selon une quelconque des revendications précédentes, **caractérisé en ce qu'**il inclut un moyen d'ancrage sous la forme d'un accessoire d'ancrage (52) opérationnel afin d'ancrer le chariot élévateur (10) sur des côtés opposés d'un fond d'un conteneur d'expédition afin d'empêcher un déplacement vers l'arrière par inadvertance de ce dernier.

6. Procédé de déchargement d'une unité de chargement contre un objet, le procédé incluant de :
supporter l'unité de chargement sur une structure de support de chargement (12) d'un chariot élévateur (10), la structure de support de chargement (12) définissant une extrémité frontale, une extrémité arrière et une direction longitudinale et le chariot élévateur (10) incluant un mécanisme de déplacement de chargement (30, 32) opérationnel afin de pousser l'unité de chargement à partir de la structure de support de chargement dans une direction avant de la structure de support de chargement (12) ;
positionner le chariot élévateur (10) en vue d'un déchargement de l'unité de chargement à côté de l'objet, avec l'extrémité frontale de la structure de support de chargement (12) faisant face à l'objet ; et
via le fonctionnement du mécanisme de déplacement de chargement (30, 32), pousser l'unité de chargement à partir de la structure de support de chargement (12) dans la direction longitudinale, de sorte que pendant au moins une dernière étape de la poussée de l'unité de chargement, l'unité de chargement (10) est ancrée au moyen d'un moyen d'ancrage (52) à une formation de fixation fixe dans une configuration dans laquelle le chariot élévateur (10) est restreint contre un déplacement dans une direction arrière de la structure de support de chargement (12), entraînant la poussée, par le mécanisme de déplacement de chargement (30, 32), de l'unité de chargement en butée contre l'objet,
**caractérisé en ce que** la formation de fixation sécurisée inclut une paire d'éléments de fixation (54) prévus dans un conteneur d'expédition au niveau des côtés opposés d'un fond du conteneur et le moyen d'ancrage inclut deux longueurs d'élément d'attache (56) sur des côtés opposés du chariot élévateur (10) et ayant des extrémités respectives distantes du chariot élévateur (10) mises en prise de manière réversible avec les éléments de fixation (54) respectifs.
